(19) **Europäisches Patentamt / European Patent Office / Office européen des brevets**

(11) **EP 3 746 655 B1**

(12) **FASCICULE DE BREVET EUROPEEN**

(45) Date de publication et mention de la délivrance du brevet:
**10.01.2024 Bulletin 2024/02**

(21) Numéro de dépôt: **19704820.0**

(22) Date de dépôt: **13.02.2019**

(51) Classification Internationale des Brevets (IPC):
**F03B 13/06** (2006.01)   **F03B 15/08** (2006.01)

(52) Classification Coopérative des Brevets (CPC):
**F03B 13/06; F03B 15/08;** F05B 2270/1012;
F05B 2270/1041; F05B 2270/337; Y02E 10/20;
Y02E 60/16

(86) Numéro de dépôt international:
**PCT/EP2019/053577**

(87) Numéro de publication internationale:
**WO 2019/158600 (22.08.2019 Gazette 2019/34)**

(54) **PROCEDE DE COMMANDE D'UNE CENTRALE HYDRAULIQUE**

VERFAHREN ZUR STEUERUNG EINES HYDRAULISCHEN KRAFTWERKS

METHOD FOR CONTROLLING A HYDRAULIC POWER PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2018 FR 1851259**

(43) Date de publication de la demande:
**09.12.2020 Bulletin 2020/50**

(73) Titulaires:
- **Supergrid Institute**
  **69100 Villeurbanne (FR)**
- **Universite d'Evry Val d'Essonne**
  **91000 Evry (FR)**

(72) Inventeurs:
- **RODRIGUES, Janailson**
  **69007 LYON (FR)**
- **DAMM, Gilney**
  **69007 LYON (FR)**
- **BENCHAIB, Abdelkrim**
  **69007 LYON (FR)**
- **LUSCAN, Bruno**
  **69007 LYON (FR)**

(74) Mandataire: **Opilex**
  **32, rue Victor Lagrange**
  **69007 Lyon (FR)**

(56) Documents cités:
**EP-A1- 0 243 937     EP-A2- 0 303 170
US-A- 5 160 244**

- **JOHANN HELL: "High flexible Hydropower Generation concepts for future grids", JOURNAL OF PHYSICS: CONFERENCE SERIES, INSTITUTE OF PHYSICS PUBLISHING, BRISTOL, GB, vol. 813, no. 1, 4 avril 2017 (2017-04-04), page 12007, XP020317492, ISSN: 1742-6596, DOI: 10.1088/1742-6596/813/1/012007 [extrait le 2017-04-04]**

## Description

L'invention concerne les centrales hydroélectriques d'accumulation par pompage, et en particulier l'utilisation de telles centrales lorsque leur turbine entraine une génératrice pour alimenter un réseau électrique alternatif.

Les machines hydrauliques incluent généralement une pompe-turbine réversible utilisée soit en pompage, soit en génération électrique. La vitesse de rotation de cette pompe-turbine réversible doit de préférence être adaptée aux propriétés de l'écoulement d'eau la traversant, afin de présenter un rendement d'utilisation optimal et afin d'éviter des phénomènes néfastes tels que la cavitation.

La plupart des machines hydrauliques, durant la génération électrique vers un réseau électrique alternatif, tournent à une vitesse synchrone avec la fréquence du réseau à alimenter. Pour les pompes-turbines réversibles en mode génératrice, cette vitesse synchrone diffère généralement de la vitesse de rotation optimale définie par les propriétés hydrauliques. Les turbines ne fonctionnent donc généralement pas avec un rendement optimal en génération électrique.

Afin de permettre une adaptation optimale de la fréquence de rotation de la turbine lors de la génération d'électricité vers un réseau électrique alternatif, des conceptions de centrales hydrauliques proposent désormais des technologies telles que la DFAM (pour double fed asynchronous machine en langue anglaise, pour une machine asynchrone à double alimentation) ou la FFSM (pour fully fed synchronous machine en langue anglaise, pour une machine synchrone à alimentation complète). Ces technologies permettent d'utiliser la turbine en génération à une fréquence différente de celle du réseau électrique à alimenter. La turbine est alors utilisée à des points de fonctionnement statiques avec une vitesse de rotation appropriée. Le rendement de production électrique et la durée de vie de la turbine peuvent ainsi être améliorés.

Avec le développement de la production d'électricité par énergies renouvelables, les sources d'énergie renouvelables connectées au réseau ont un fonctionnement potentiellement intermittent, pouvant conduire à des interruptions temporaires et subites de la production d'électricité. De plus, de telles sources d'énergie renouvelable abaissent l'inertie du réseau électrique alternatif et donc sa stabilité. Une compensation rapide de la baisse de production d'électricité doit alors être effectuée lors d'une interruption temporaire d'une ou plusieurs sources d'énergie renouvelable, afin d'éviter de déstabiliser le réseau alternatif.

Le document 'Optimisation des stratégies de réglage d'une installation de pompage-turbinage à vitesse variable' par Yves Pannatier, a proposé d'utiliser l'effet de roue libre des turbines de centrales hydrauliques, pour obtenir un accroissement de la puissance électrique fournie au réseau avec une grande dynamique. Lorsque la turbine de la centrale hydraulique n'est pas utilisé à pleine charge en génération, un tel effet de roue libre est utilisable pour obtenir un accroissement très rapide de la puissance électrique générée. L'utilisation de l'effet de roue libre d'une turbine consiste à effectuer un appel d'énergie électrique sur la génératrice entraînée par la turbine, pour bénéficier de l'énergie mécanique stockée sous forme d'énergie cinétique par la vitesse de rotation de la turbine.

L'appel d'énergie électrique induit une baisse de la vitesse de rotation de la turbine, rendue possible par les technologies d'adaptation de vitesse de rotation. La stabilité de la turbine, en particulier une turbine de type Francis, peut être affectée par sa vitesse de rotation. Ainsi, si la vitesse de rotation de la turbine passe en dessous d'une vitesse critique, la stabilité de la turbine peut être remise en cause, il peut alors s'avérer impossible de réaccélérer la vitesse de rotation de la turbine. Afin de prévenir un problème de stabilité, des protections de la turbine déconnectent la génératrice du réseau électrique lorsque le problème est détecté. L'interruption de génération électrique par une centrale hydraulique supposée apporter une compensation rapide de production d'électricité peut conduire à un effet en cascade, aboutissant à un effondrement du réseau électrique.

Afin d'éviter de déclencher les protections de la turbine, une vitesse de rotation minimale de la turbine est définie. L'accroissement de production d'énergie électrique est interrompu dès que la turbine atteint cette vitesse de rotation minimale. La vitesse de rotation minimale est déterminée par un dimensionnement de la turbine à un point de fonctionnement statique prédéfini.

La vitesse de rotation minimale choisie limite les possibilités d'accroissement temporaire de la production d'énergie électrique par la centrale hydraulique. L'augmentation de puissance électrique par la centrale hydraulique peut donc s'avérer insuffisante pour apporter la contribution attendue, l'interruption de production subite d'une ou plusieurs sources d'énergie renouvelable pouvant s'avérer non compensée.

L'invention vise à résoudre un ou plusieurs de ces inconvénients. L'invention porte ainsi sur un procédé de commande d'une centrale hydraulique comportant une turbine à vitesse variable entraînant une génératrice électrique, une structure de conversion connectée à ladite génératrice d'une part et à un réseau électrique d'autre part, telle que défini dans les revendications annexées.

L'invention porte également sur les variantes des revendications dépendantes. L'homme du métier comprendra que chacune des caractéristiques de la description ou des revendications dépendantes peut être combinée indépendamment aux caractéristiques d'une revendication dépendante, sans pour autant constituer une généralisation intermédiaire.

Le document EP0303170 décrit D1 décrit un procédé de commande d'une centrale hydraulique comportant une turbine à vitesse variable entraînant une génératrice électrique. Le procédé fait fonctionner la centrale hydraulique avec une valeur initiale de consigne de puissance électrique à fournir au réseau électrique, récupère une valeur de hauteur d'eau en entrée de la turbine, récupère une nouvelle valeur de consigne de puissance électrique supérieure à la valeur initiale, détermine la vitesse de rotation minimale de la turbine. La centrale hydraulique est commandée pour délivrer une puissance électrique égale à la nouvelle valeur de consigne de puissance électrique et pour maintenir la vitesse de rotation de la turbine au-dessus de la vitesse de rotation minimale déterminée.

D'autres caractéristiques et avantages de l'invention ressortiront clairement de la description qui en est faite ci-après, à titre indicatif et nullement limitatif, en référence aux dessins annexés, dans lesquels :

- la figure 1 est un diagramme illustrant l'influence de la réduction de l'inertie d'un réseau électrique sur sa réponse en fréquence, en fonction de la proportion de sources d'énergies renouvelables ;
- la figure 2 est un diagramme illustrant un exemple d'évolution de puissance électrique fournie par une centrale hydraulique lors d'une compensation subite de puissance ;
- la figure 3 est un diagramme illustrant la puissance mécanique et la vitesse d'une turbine dans le temps, avec un appel de puissance induisant une instabilité de la turbine ;
- la figure 4 est un schéma illustrant une centrale hydraulique connectée à un réseau électrique alternatif ;
- la figure 5 est une représentation schématique d'un diagramme illustrant de procédé mis en oeuvre pour commander la centrale hydraulique ;
- la figure 6 illustre un exemple d'évolution de la vitesse de rotation d'une turbine, comparée à des seuils ;
- la figure 7 est un diagramme bidimensionnel illustrant d'une part la vitesse optimale d'une turbine et d'autre part la vitesse critique de cette turbine pour différentes valeurs de puissance caractéristique ;
- la figure 8 est un exemple de logique de commande de la centrale hydraulique ;
- la figure 9 est un diagramme illustrant un exemple de couple caractéristique d'une turbine en fonction de sa vitesse caractéristique, pour différentes valeurs d'ouverture de vanne ;
- la figure 10 est un diagramme illustrant un exemple de débit caractéristique d'une turbine en fonction de sa vitesse caractéristique, pour différentes valeurs d'ouverture de vanne ;
- la figure 11 est un diagramme tridimensionnel illustrant le rendement hydraulique de la turbine en fonction de sa puissance caractéristique et de sa vitesse caractéristique ;
- la figure 12 est un diagramme illustrant l'évolution de plusieurs paramètres de fonctionnement d'une centrale hydraulique selon l'invention ;
- la figure 13 illustre un schéma de différents paramètres de fonctionnement d'une centrale hydraulique de type FFSM ;
- les figures 14 à 16 illustrent des schémas de commande simplifiés pour une centrale hydraulique de type FFSM fonctionnant avec différents modes de commande de puissance active ;
- la figure 17 est un diagramme représentatif de différentes puissances mises en jeu dans une centrale hydraulique.

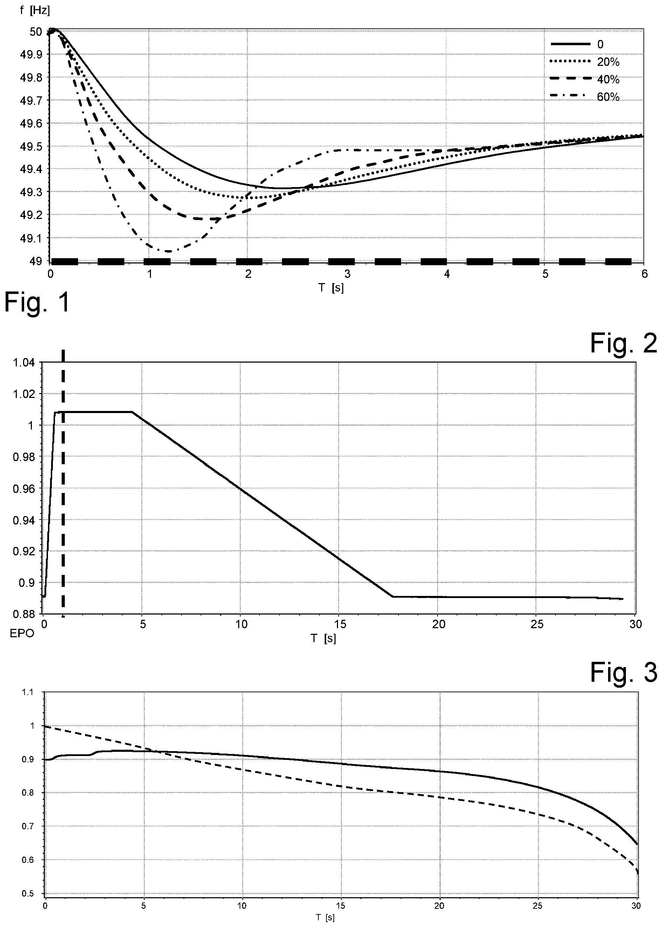

La figure 1 est un diagramme illustrant l'influence de la réduction de l'inertie d'un réseau électrique sur sa réponse en fréquence, en fonction de la proportion de sources d'énergies renouvelables. La courbe en trait plein correspond à un réseau alternatif de référence dépourvu de sources d'énergies renouvelables. La courbe en pointillés correspond à un réseau alternatif présentant un niveau d'intégration de sources d'énergie renouvelable de 20 %. La courbe en trait discontinu correspond à un réseau alternatif présentant un niveau d'intégration de sources d'énergie renouvelable de 40 %. La courbe en tiret-point correspond à un réseau alternatif présentant un niveau d'intégration de sources d'énergie renouvelable de 60 %. On constate donc que l'augmentation du niveau d'intégration de sources d'énergies renouvelables abaisse l'inertie du réseau alternatif et accroît la dépendance du réseau à des déconnexions rapides d'une des sources, avec le risque de déstabiliser le réseau. Ce risque est quantifié par l'amplitude de l'excursion en fréquence du réseau (qui doit être limitée à 1 Hz pour un réseau électrique à 50Hz par exemple) et par la vitesse de variation de fréquence du réseau électrique. La baisse de la fréquence du réseau peut conduire à des déconnexions de charges, et la vitesse de variation de fréquence peut activer la protection de charges et leur déconnexion. De telles déconnexions ont un effet en chaine sur la déstabilisation du réseau électrique.

L'invention vise à favoriser une augmentation rapide de la puissance électrique fournie par une centrale hydraulique. Le principe est de permettre de récupérer davantage de puissance électrique en jouant sur l'inertie mécanique de la turbine entraînant la génératrice électrique. Avec une centrale hydraulique configurée pour disposer d'une vitesse de rotation de turbine variable en génération, un tel effet d'inertie peut être utilisé pour l'augmentation rapide de la puissance électrique, du fait de la possibilité de réduire la vitesse de rotation de cette turbine.

La figure 2 est un diagramme illustrant un exemple d'évolution de puissance électrique fournie par une centrale hydraulique lors d'une compensation subite de puissance électrique. À l'instant t=0, un appel de surcroît de puissance électrique est effectué auprès de la centrale hydraulique. Grâce à l'effet de roue libre, la puissance électrique fournie par la centrale hydraulique augmente rapidement, en moins d'une seconde. Le nouveau niveau de puissance électrique fourni par la centrale hydraulique est maintenu pendant une certaine durée. L'appel de puissance électrique accrue est ensuite supprimé, et la puissance électrique de la centrale hydraulique revient à son niveau initial.

La figure 3 illustre un exemple de puissance mécanique de la turbine en trait plein, et de vitesse de cette turbine en trait discontinu selon un exemple de fonctionnement défaillant. Dans cet exemple, un excédent de puissance électrique a été fourni par la centrale hydraulique, ce qui a conduit à ralentir la turbine jusqu'à une vitesse trop faible. Ainsi, la turbine rentre dans une zone de fonctionnement instable, dans laquelle la puissance électrique et la puissance mécanique chutent.

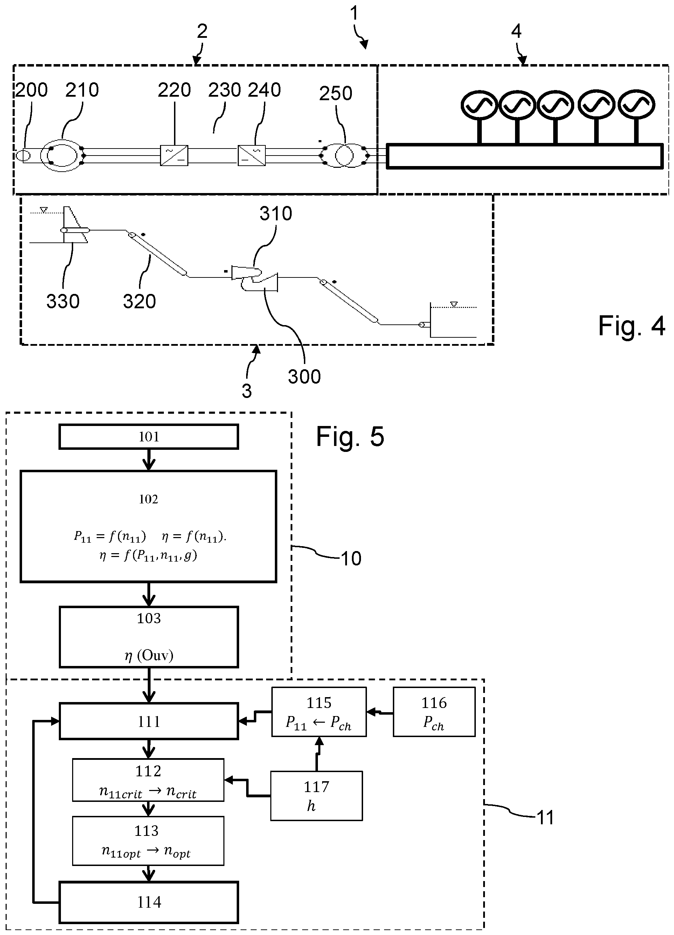

La figure 4 est un schéma illustrant un exemple de centrale hydraulique 1 connectée à un réseau électrique alternatif 4 en vue de fournir de façon dynamique un surcroît de puissance électrique sans entrer dans la zone de fonctionnement instable de sa turbine. La centrale hydraulique 1 comprend un circuit électrique 2 et un circuit hydraulique 3. La centrale hydraulique 1 illustrée ici est de type FFSM, mais on peut également envisager d'autres types de centrales hydrauliques par exemple de type DFIM (pour doubly fed induction machine en langue anglaise, pour machine à induction à double alimentation).

Le circuit électrique 2 comprend de façon connue en soi une structure de conversion côté réseau électrique et une structure de conversion côté machine hydraulique reliées par une liaison courant continu 230. La structure de conversion côté réseau électrique comprend de façon connue en soi un transformateur 250 connecté au réseau électrique 4, et un convertisseur continu/alternatif 240 connecté au transformateur 250. La structure de conversion côté circuit hydraulique comprend un convertisseur alternatif/continu 220, une machine électrique 210 connectée au convertisseur 220, et un circuit d'excitation 200 pour la machine électrique 210. La machine électrique 210 est par exemple un moteur de type synchrone.

Le circuit hydraulique 3 comprend de façon connue en soi un barrage 330 destiné à former un réservoir d'eau, une conduite forcée 320 connectée à une canalisation pénétrant dans le réservoir délimité par le barrage 330, une vanne ou directrice (wicket gate en langue anglaise) 310 en aval de la conduite forcée 320, et une turbine 300 recevant sélectivement de l'eau en fonction de l'état d'ouverture de la vanne 310. La turbine 300 est fixée de façon connue en soi sur le rotor de la machine électrique 210. En mode génératrice, la turbine 300 est entraînée par l'eau de la conduite forcée 320 et entraîne donc le rotor de la machine électrique 210 en rotation. En mode pompe, la turbine 300 est entraînée en rotation par le rotor de la machine électrique 210 et refoule de l'eau dans le réservoir par l'intermédiaire de la conduite forcée 320.

Un circuit de commande (dont un exemple est détaillé par la suite) vise à contrôler la structure de conversion côté réseau électrique, la structure de conversion côté machine hydraulique et le fonctionnement de la turbine 300. Pour un fonctionnement stable du circuit électrique 2, la tension sur la liaison courant continu 230 est maintenue constante, par un contrôle de la structure de conversion côté réseau électrique. La structure de commande côté circuit hydraulique 3 et la turbine 300 sont commandées par ce circuit de commande afin de délivrer la puissance électrique cible.

À cet effet, le circuit de commande peut disposer d'un premier mode, dit mode de contrôle de puissance électrique active, contrôlant la puissance électrique active délivrée par le convertisseur 220 vers le réseau électrique 4, et en contrôlant la vitesse de rotation de la turbine 300 par une valeur de consigne sur le niveau d'ouverture de la directrice 310.

Dans ce mode de fonctionnement, lorsque le circuit de commande applique une puissance de consigne accrue sur le convertisseur 220, la puissance électrique délivrée augmente effectivement après un temps très bref (par exemple de l'ordre de 20 ms), la vitesse de rotation de la turbine 300 étant ralentie. Sans instabilité, le circuit de commande arrive à commander la turbine 300 afin que celle-ci retrouve sa vitesse de rotation initiale.

Le circuit de commande peut disposer d'un deuxième mode, dit mode de contrôle de vitesse angulaire, dans lequel la vitesse de rotation de la turbine 300 est contrôlée par l'intermédiaire du convertisseur 220, tandis que la puissance active fournie au réseau 4 est contrôlée par l'intermédiaire de la turbine 300.

Dans ce mode de fonctionnement, le circuit de commande contrôle la vitesse de rotation de la turbine 300 pour que cette vitesse fournisse un rendement optimum pour la nouvelle puissance de consigne accrue. Le circuit de commande contrôle ensuite le convertisseur 220 de sorte que la vitesse soit ajustée en adaptant la puissance de sortie vers le réseau électrique 4 en fonction de la puissance mécanique fournie par la turbine 300.

Pour l'exemple de l'utilisation en continu d'une turbine 300 de type Francis, la plage d'opération en continu est usuellement définie par des contraintes de cavitation à l'entrée, de cavitation en sortie, de vortex inter-aubes de la turbine 300, de vortex à pleine charge ou de vortex à charge partielle.

Pour une pompe turbine réversible à vitesse fixe, le facteur limitant pour une réponse dynamique de la turbine 300 est la variation de pression d'eau dans la conduite forcée 320 connectée à la turbine 300. La variation de pression due à l'inertie de la colonne d'eau est alors un indicateur de la stabilité hydroélectrique de la turbine 300. Pour une turbine 300 en fonctionnement à vitesse variable, il est nécessaire d'intégrer les limites de vitesse lors d'une réponse dynamique en puissance à cause des limites de l'effet de roue libre.

On a détaillé ici l'exemple d'une turbine 300 de type Francis mais d'autres types de turbines peuvent également être mis en oeuvre dans le cadre de l'invention, par exemple une turbine de type Kaplan ou VLH.

La commande de la centrale hydraulique 1 met en oeuvre un procédé illustré schématiquement à la figure 5, afin de déterminer une vitesse minimale de rotation de la turbine 300 garantissant sa stabilité. Ce procédé comprend un ensemble 10 d'étapes de conception, et un ensemble 11 d'étapes de contrôle de fonctionnement.

La modélisation du comportement dynamique de la machine hydraulique ou du circuit hydraulique 3 est basée sur des mesures de points de fonctionnement pour différents niveaux d'ouverture de la directrice 310 de la turbine 300, en statique. La modélisation du comportement dynamique du circuit hydraulique 3 repose sur l'hypothèse que les points de fonctionnement du circuit hydraulique 3 en dynamique sont identiques à ses points de fonctionnement en statique.

Des modélisations statiques de fonctionnement de machines hydrauliques définissent généralement leurs performances en fonction de 5 variables, généralement exprimées en unités [pu] :

- le niveau d'ouverture de la directrice 310 de la turbine 300, désigné par le paramètre $g$ ;
- le couple de la turbine 300, désigné par le paramètre $T$ ;
- le débit d'eau à travers la turbine 300, désigné par le paramètre $q$ ;
- la vitesse de rotation angulaire de la turbine 300, désignée par le paramètre $n$ ;
- la hauteur d'eau dans la conduite forcée 320, désignée par le paramètre $h$.

La récupération des informations relatives aux points de fonctionnement statiques du circuit hydraulique 3 correspond à l'étape 101 des étapes de conception.

Afin d'éliminer le paramètre de la hauteur d'eau, des transformations de paramètres sont réalisées pour obtenir des paramètres caractéristiques, indépendants de la hauteur d'eau $h$ :

$$T_{11} = T/h$$

$$n_{11} = n/\sqrt{h}$$

$$q_{11} = q/\sqrt{h}$$

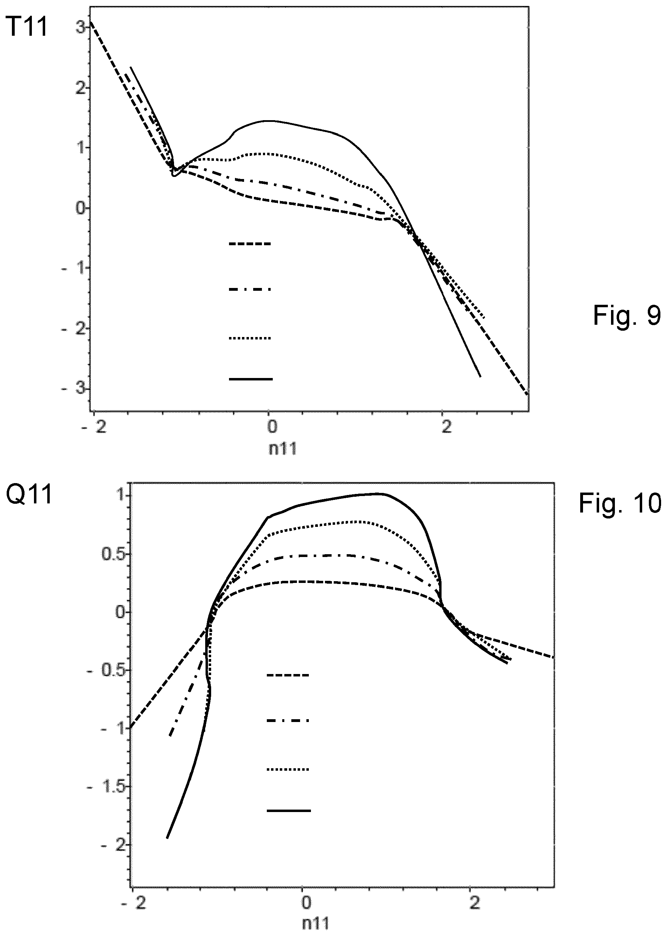

La modélisation du fonctionnement du circuit hydraulique 3 peut alors se définir par rapport aux variables $g$, $T_{11}$, $n_{11}$, $q_{11}$. La modélisation peut alors être illustrée d'une part par un diagramme de couple caractéristique $T_{11}$ en fonction de la vitesse caractéristique $n_{11}$ pour différentes valeurs d'ouverture $g$, (exemple de la figure 9), et d'autre part par un diagramme de débit caractéristique $q_{11}$ en fonction de la vitesse caractéristique $n_{11}$ pour différentes valeurs d'ouverture $g$ (exemple de la figure 10). Les diagrammes des figures 9 et 10 correspondent à un exemple de turbine de type Francis.

On peut alors en déduire une puissance mécanique caractéristique $P_{11}$ :

$$P_{11} = T_{11} * n_{11} = P/h\sqrt{h}$$

Le rendement de la turbine peut alors être exprimé par $\eta = P_{11}/q_{11}$

Des diagrammes correspondants peuvent ainsi être générés pour les paramètres $\eta$ et $P_{11}$.

Les transformations de paramètres et la génération de diagrammes de modélisation de paramètres caractéristiques en fonction de la vitesse de rotation caractéristique $n_{11}$ peuvent être réalisées lors de l'étape 102 des étapes de conception.

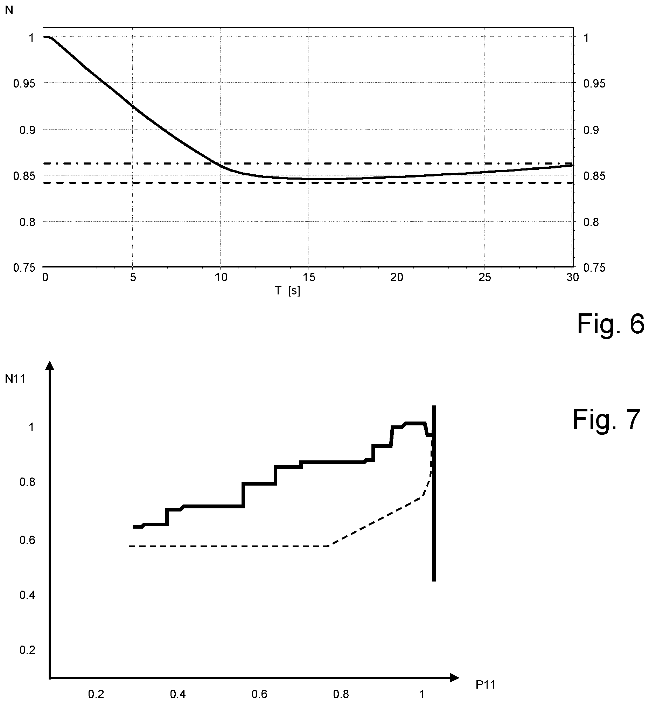

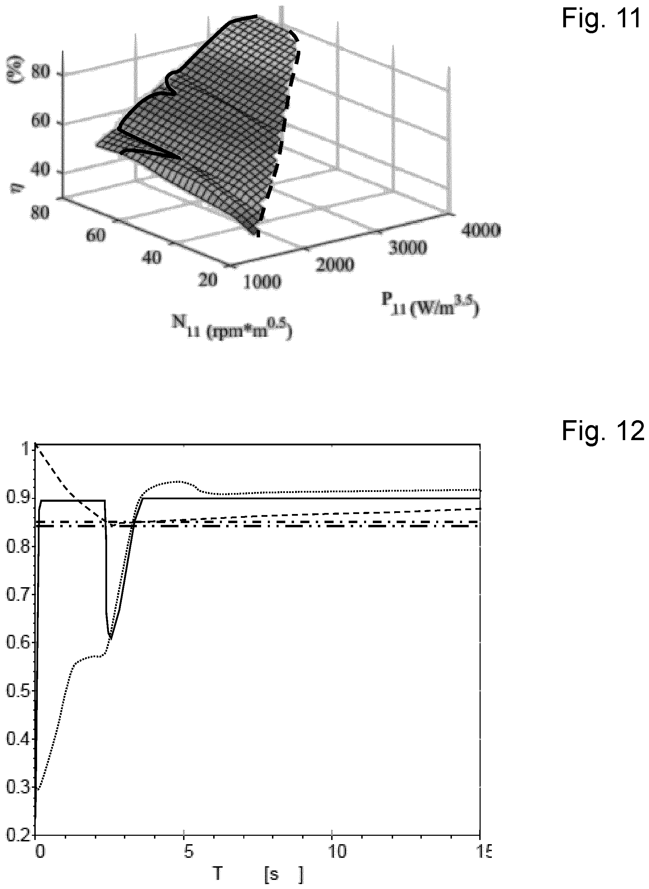

Les diagrammes des figures 9 et 10 peuvent être utilisés pour déduire un diagramme tridimensionnel du rendement du circuit hydraulique 3 en fonction de la puissance mécanique caractéristique $P_{11}$ et de la vitesse de rotation caractéristique $n_{11}$. Le diagramme correspondant est illustré à la figure 11. La génération d'un tel diagramme correspond à l'étape 103 des étapes de conception. La bordure droite du diagramme tridimensionnel illustre ici les vitesses de rotation critiques de la turbine 300 en fonction de la puissance caractéristique $P_{11}$. La courbe en trait renforcé correspond aux points de fonctionnement optimaux de la turbine 300 en fonction de la puissance caractéristique $P_{11}$. La courbe (trait plein) de vitesse optimale de fonctionnement de la turbine 300 et la courbe (trait discontinu) de la vitesse critique de cette turbine 300 sont illustrées sur le diagramme bidimensionnel de la figure 7.

Dans le cas de cette invention, la vitesse critique peut être définie comme la vitesse minimum pour laquelle la turbine 300 peut maintenir la puissance mécanique équivalente à la puissance électrique demandée par le réseau électrique 4. Ainsi, au-delà de cette vitesse critique, la machine hydraulique ne peut pas maintenir la puissance électrique demandée par le réseau et va rentrer dans un effet cascade conduisant à une instabilité.

Un exemple d'ensemble de commandes 11 du circuit hydraulique 3 pour la mise en oeuvre de l'invention va maintenant être décrit.

À l'étape 117, on récupère la valeur de hauteur d'eau h appliquée à l'entrée de la turbine 300. Cette valeur de hauteur d'eau h peut être récupérée par tous moyens appropriés, par exemple par des capteurs de pression de façon connue en soi. La hauteur d'eau h est un paramètre relativement aisé à récupérer, et variant à une vitesse très lente, avec le niveau d'eau en amont du barrage 330.

À l'étape 116, on récupère une nouvelle valeur de puissance mécanique de consigne $P_{ch}$, en vue de faire face à un appel d'augmentation dynamique de la puissance électrique à fournir au réseau 4. La consigne de puissance mécanique correspond à la puissance mécanique de la turbine 300 nécessaire pour fournir une puissance électrique souhaitée Pes au réseau 4. La consigne de puissance mécanique $P_{ch}$ peut par exemple être déterminée à partir d'une consigne de puissance électrique Pec :

- en appliquant une transformation tenant compte du rendement de conversion entre la puissance mécanique et la puissance électrique fournie au réseau, en fonctionnement statique ;
- en tenant compte de la relation suivante en fonctionnement dynamique :
Pelec = $\eta$*Pmeca + d(Ht * n²)/dt, avec $\eta$ le rendement de conversion entre la puissance mécanique et la puissance électrique fournie au réseau, Ht l'inertie de la masse entraînée en rotation du circuit hydraulique 3 (combinaison de la turbine 300 et du rotor du moteur électrique 210) exprimée en secondes, et n la vitesse de rotation de la turbine 300 à la puissance électrique nominale.

La puissance électrique de consigne Pec peut par exemple correspondre à la relation suivante :

$$Pec = Pei + Pea$$

Avec Pei la puissance électrique initiale fournie au réseau 4, et Pea un surcroît de puissance électrique requis par le réseau électrique 4.

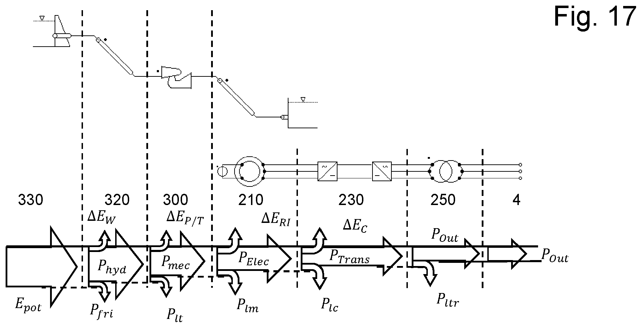

La figure 17 détaille schématiquement les différentes puissances mises en jeu dans la centrale hydraulique 1. Les flèches orientées vers le bas correspondent aux pertes de puissance, les flèches vers le haut correspondent aux énergies échangées transitoirement.

Le barrage 330 dispose d'une énergie potentielle Epot.

Dans la conduite forcée 320, transite une puissance hydraulique Phyd, on subit des pertes par friction Pfri et une énergie $\Delta EW$ est échangée transitoirement.

Au niveau de l'ensemble vanne 300 et turbine 310, une puissance mécanique Pmec est développée. Une puissance Plt est perdue par pertes hydrauliques dans cet ensemble, et une énergie $\Delta E_{P/T}$ est échangée transitoirement.

Au niveau de la machine électrique 210, une puissance électrique Pelec est fournie. Une puissance Plm est perdue et une énergie $\Delta E_{RI}$ est échangée transitoirement du fait de l'inertie en rotation de l'ensemble tournant.

Au niveau de la liaison courant continu 230, une puissance Ptrans est transmise. Une puissance Plc est perdue et une énergie $\Delta E_C$ est échangée transitoirement par effet capacitif.

Au niveau du transformateur 250 et du réseau électrique 4, une puissance Pout est fournie. Une puissance Pltr est perdue par des pertes de transformation.

À l'étape 115, on réalise une conversion de la puissance mécanique de consigne $P_{ch}$, en une puissance caractéristique $P_{11}$ en tenant compte de la hauteur d'eau h par moyen de la formule $P_{11}=P_{ch}/h\sqrt{h}$.

À l'étape 111, la vitesse de rotation caractéristique critique $n_{11crit}$ de la turbine 300 est déterminée pour cette puissance caractéristique $P_{11}$, par exemple à partir de diagramme de la figure 7 ou du diagramme de la figure 11. Cette vitesse de rotation caractéristique critique $n_{11crit}$ est convertie à l'étape 112 en vitesse de rotation critique $n_{crit}$ de la turbine 300, en utilisant la relation $n_{11}=n/\sqrt{h}$.

Avantageusement, la vitesse de rotation caractéristique optimale $n_{11opt}$ de la turbine 300 pour cette puissance caractéristique $P_{11}$ à l'état stabilisé est également déterminée à l'étape 111. Cette vitesse de rotation caractéristique optimale $n_{11opt}$ est convertie à l'étape 113 en vitesse de rotation optimale $n_{opt}$ de la turbine 300.

À l'étape 114, une régulation du circuit hydraulique 3 est réalisée de façon à garantir que la vitesse de rotation de la turbine 300 reste supérieure à la valeur $n_{crit}$ lors de l'augmentation dynamique de puissance fournie par la centrale hydraulique 1. Ainsi, on peut garantir que la vitesse de rotation de la turbine 300 est maintenue à un niveau évitant de déclencher les sécurités de détection d'instabilité, ce qui permet d'éviter une déconnexion de la centrale hydraulique 1 du réseau 4.

Avantageusement, la régulation de la centrale 1 peut être réalisée de façon à garantir que la vitesse de rotation de la turbine 300 reste supérieure à une valeur $n_s$, avec $n_s > n_{crit}$ (par exemple $n_s$ =1,05 * $n_{crit}$), de façon à conserver une marge de sécurité par rapport à la vitesse de rotation critique $n_{crit}$.

**EP 3 746 655 B1**

À l'étape 114, la régulation du circuit hydraulique 3 peut également être réalisée pour faire fonctionner celui-ci à son rendement optimal après que la puissance mécanique a atteint la valeur de la puissance mécanique $P_{ch}$. En effet, une fois cette puissance mécanique établie, il est intéressant de stabiliser le circuit hydraulique 3 pour qu'elle fonctionne à son rendement optimal.

Les valeurs $n_{opt}$ et $n_{crit}$ peuvent être fournies au circuit de commande de la centrale hydraulique 1 pour son contrôle en temps réel.

Lors d'une requête d'augmentation de puissance électrique reçue du réseau 4, le procédé de commande de la centrale hydraulique peut être mis en oeuvre suivant la boucle suivante :

> a) recevoir la puissance électrique souhaitée Pes ;
> b) récupérer la valeur de la hauteur d'eau à l'entrée de la turbine 300 ;
> c) calculer la vitesse de rotation critique $n_{crit}$ de la turbine 300 pour la puissance Pes;
> d) déterminer la vitesse de rotation de sécurité $n_s$ de la turbine 300 ;
> e) récupérer la valeur de la vitesse de rotation n de la turbine 300 ;
> f) déterminer si $n \geq n_s$ ;
> g) si $n \geq n_s$, définir Pec=Pes ;
> h) si $n < n_s$, définir Pec =Pes * (n- $n_{crit}$)/( $n_s$ - $n_{crit}$) ;
> i) retour à l'étape a)

Un tel procédé permet de garantir que la turbine 300 va progressivement reprendre une vitesse de rotation supérieure à la valeur $n_s$.

Si on raisonne en puissance mécanique, on peut remplacer les valeurs Pes et Pec respectivement par $P_{ch}$ et $P_{minter}$ respectivement, avec $P_{minter}$ une consigne de puissance mécanique intermédiaire.

La figure 6 illustre un exemple d'évolution de la vitesse d'une turbine 300 lors d'un accroissement dynamique de la puissance électrique fournie par la centrale hydraulique. À l'instant t=0, un appel de puissance accrue est reçu par la centrale hydraulique. La centrale hydraulique 1 fournit la puissance électrique accrue au réseau 4 en un délai très bref. La vitesse de rotation de la turbine 300 décroît progressivement, du fait du freinage par le moteur 210 utilisé en génératrice pour fournir la puissance électrique accrue. Lorsque la vitesse de rotation de la turbine 300 atteint la valeur $n_s$, le circuit de commande de la centrale hydraulique réagit pour éviter que la vitesse de rotation ne tombe sous le seuil $n_{crit}$. Le circuit de commande réduit par exemple légèrement la puissance électrique fournie au réseau 4 ou par une ouverture accrue de la vanne 310.

Selon un mode de fonctionnement souhaitable, on peut anticiper au préalable la quantité d'énergie cinétique disponible de la turbine 300 sans la déstabiliser, afin de déterminer une puissance électrique transitoire qui peut être appelée par le réseau électrique 4 et pendant quelle durée cette puissance électrique transitoire peut être appelée.

Ainsi, le procédé décrit précédemment a permis de calculer les valeurs $n_{opt}$ et $n_{crit}$. La quantité d'énergie cinétique disponible $W_{ec}$ peut être définie par la relation suivante :

$$W_{ec}= Ht * (n_{optinit}^2 - n_{crit}^2)$$

Avec Ht l'inertie de la masse entraînée en rotation du circuit hydraulique 3 (combinaison de la turbine 300 et du rotor du moteur électrique 210), exprimée en secondes, et $n_{optinit}$ la vitesse de rotation optimale de la turbine 300 utilisée avant l'appel de puissance supplémentaire.

L'inertie Ht peut être déterminée par la formule suivante, pour une vitesse de rotation nominale :

$$Ht= J* n_{nom}^2 / (2*Sn)$$

Avec J le moment d'inertie de la masse entraînée en rotation en $Kg.m^2$, $n_{nom}$ la vitesse nominale (par exemple pour un point de fonctionnement à rendement optimal) en rad/s, Sn la puissance nominale du moteur électrique en VA.

Des simulations ont par exemple été réalisées pour un circuit hydraulique 3 présentant une inertie de 3,2 secondes pour la hauteur d'eau nominale de la centrale hydraulique.

Si le réseau électrique 4 requiert un accroissement $W_{req}$ d'énergie fournie inférieur à la quantité d'énergie cinétique disponible $W_{ec}$, la centrale hydraulique est apte à fournir cette énergie.

L'accroissement d'énergie $W_{req}$ est défini comme suit. Initialement, la centrale hydraulique 1 respecte la condition $P_{mecainit} * R = P_{elecinit}$, avec $P_{mecainit}$ la puissance mécanique initiale de la turbine 300, R le rendement de conversion de l'énergie mécanique de la turbine 300 en puissance électrique fournie au réseau 4, et $P_{elecinit}$ la puissance électrique initiale fournie au réseau 4. Lorsque le réseau 4 appelle une puissance électrique accrue Pec = $P_{ch}$ * R, la puissance électrique augmente très rapidement jusqu'à la valeur Pec. Selon un modèle, on peut estimer que l'augmentation de puissance mécanique de la turbine 300 est linéaire dans le temps entre la valeur $P_{mecainit}$ et $P_{ch}$. Ainsi, une durée tp est nécessaire avant que la puissance mécanique atteigne la valeur $P_{ch}$, ce qui peut se traduire par une pente désignée par RoCoP. La valeur $W_{req}$ peut alors se définir par la relation suivante :

$$W_{req} = (P_{ch} - P_{mecainit})^2 / (2*RoCoP)$$

Ainsi, on pourra déterminer au préalable si la centrale hydraulique 1 est capable de fournir l'énergie $W_{req}$ sans induire d'instabilité du circuit hydraulique 3. On pourra donc au préalable calculer la valeur maximale de Pec ou de $P_{ch}$ disponible lorsque la centrale hydraulique 1 fonctionne à un point de fonctionnement donné.

Si on détermine que $W_{req} > W_{ec}$, on peut calculer une valeur de puissance mécanique $P_{lim}$ vérifiant $P_{lim} < P_{ch}$ et $(P_{lim} - P_{mecainit})^2 / (2*RoCoP) < W_{ec}$. Cette valeur $P_{lim}$ peut être utilisée transitoirement comme consigne pour la centrale hydraulique 1 pour augmenter la puissance électrique fournie au réseau 4 par effet de roue libre.

RoCoP est ici approximé comme une pente fixe (des résultats d'essais ont montré que cette hypothèse était assez précise) mais peut en pratique être un paramètre variable dépendant du rendement de la turbine, de l'inertie de la colonne d'eau, de l'effet coup de bélier et du temps de réponse de la vanne 310. RoCoP peut être exprimé comme la vitesse maximale de variation de puissance mécanique Pm de la turbine 300, soit dPm/dt.

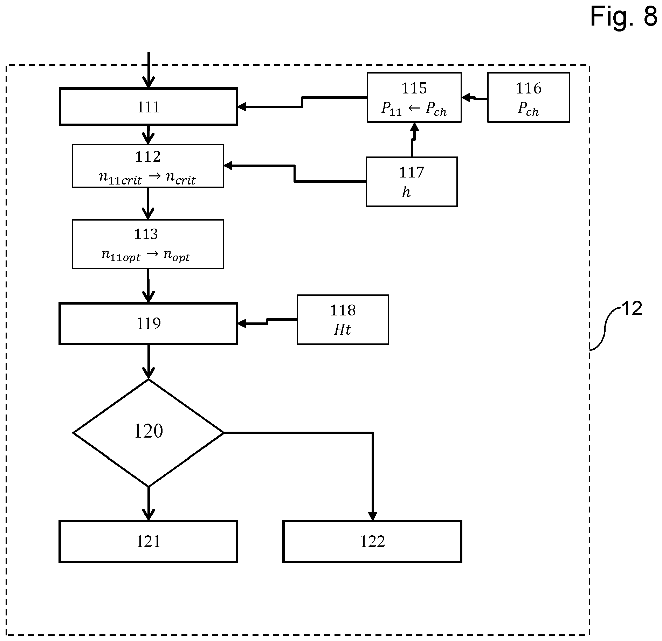

Un procédé de commande correspondant est illustré par référence à la figure 8. Le procédé de commande met ici en oeuvre exemple d'ensemble de commandes 12 du circuit hydraulique 3. Les étapes de commande 111 à 113 et 115 à 117 sont ici identiques à celles décrites précédemment.

A l'étape 118, on récupère la valeur d'inertie Ht décrite précédemment.

A l'étape 119, on calcule la quantité d'énergie cinétique $W_{ec}$ disponible par effet de roue libre, selon la relation décrite précédemment, sur la base des valeurs Ht, $n_{optinit}$ et $n_{crit}$ disponibles. Ce calcul permet par exemple d'informer l'exploitant de la centrale hydraulique 1 ou l'exploitant du réseau 4 sur la valeur de cette quantité d'énergie $W_{ec}$, pour anticiper la gestion d'une capacité d'augmentation de puissance électrique produite par la centrale hydraulique 1.

A l'étape 120, on vérifie si $W_{req} > W_{ec}$, comme détaillé précédemment. Si ce n'est pas le cas, $P_{ch}$ peut être utilisée comme puissance mécanique de consigne à l'étape 122. Si $W_{req} > W_{ec}$, on met en oeuvre l'étape 121 : on calcule la valeur de puissance mécanique $P_{lim}$ vérifiant $P_{lim} < P_{ch}$ et $(P_{lim} - P_{mecainit})^2 / (2*RoCoP) < W_{ec}$. Puis on commande transitoirement la centrale hydraulique 1 avec cette valeur de consigne $P_{lim}$ de puissance mécanique.

L'invention permet d'envisager de nouveaux modèles économiques d'exploitation d'une centrale hydraulique. En effet, un exploitant de centrales hydrauliques peut faire fonctionner celle-ci à faible charge et commercialiser une réserve de puissance électrique dynamique auprès de l'exploitant du réseau électrique. En effet, l'exploitant du réseau électrique peut être amené à payer cette réserve de puissance relativement chère, en vue de compenser d'éventuelles interruptions de service de sources d'énergies renouvelables un tel modèle économique est d'autant plus rentable que l'invention permet de déterminer avec précision la réserve de puissance, ce qui permet de commercialiser une réserve de puissance d'un montant accru.

Le gestionnaire du réseau électrique 4 auquel la centrale hydraulique est connectée peut anticiper la gestion de son réseau, en disposant potentiellement en temps réel de la réserve de puissance de la centrale hydraulique 1.

La figure 12 est un diagramme illustrant l'évolution de plusieurs paramètres de fonctionnement d'une centrale hydraulique 1 dans le temps, selon un exemple de mise en oeuvre de l'invention. La courbe en trait continu correspond à la puissance électrique fournie au réseau 4, la courbe en pointillés correspond à la puissance mécanique de la centrale hydraulique 1, la courbe en trait discontinu correspond à la vitesse de rotation de la turbine 300, la limite en tiret-point correspond à la vitesse de rotation de sécurité $n_s$ de la turbine 300, la limite en tiret-double points correspond à la vitesse de rotation critique $n_{crit}$.

A t= 0, la puissance mécanique et la puissance électrique de la centrale hydraulique 1 sont à un niveau de 0,3 en [pu], soit 30% de leur valeur nominale. Un appel d'une puissance électrique de 0,9 [pu] est reçu pour le réseau 4 à t=0. Par contrôle de la structure de conversion, la puissance électrique de 0,9 [pu] est fournie en un temps de l'ordre de 0,3s. La turbine 300 est commandée avec une consigne de puissance Pch, correspondant à la puissance électrique de 0,9 [pu]. Un niveau d'ouverture correspondant est appliqué sur la vanne 310.

Entre l'instant t=0,3 s et t=1,2s, l'essentiel du surcroît de puissance électrique est fourni par l'effet de roue libre de la turbine 300. La vitesse de rotation de la turbine 300 décroît donc progressivement et la puissance mécanique croît progressivement dans cet intervalle. La puissance électrique est maintenue à un plateau de 0,9 [pu].

Entre l'instant t=1,2 s et t=2,3s, la puissance électrique est maintenue au plateau de 0,9 [pu]. La puissance mécanique croît plus lentement sur cet intervalle, l'accroissement de la puissance mécanique étant alors dû essentiellement à l'accroissement du niveau d'ouverture de la vanne 310. La vitesse de rotation de la turbine 300 continue à décroître, tout en restant supérieure à la valeur $n_s$.

A l'instant t=2,3s, la vitesse de rotation de la turbine 300 atteint la valeur $n_s$. Entre l'instant t=2,3s et t=2,6s, une limitation de la puissance électrique est requise, comme décrit lorsque la condition $n<n_s$ est remplie. La puissance électrique décroît, alors que la vitesse de croissance de la puissance mécanique augmente. La vitesse de rotation de la turbine 300 décroît mais reste supérieure à la valeur $n_{crit}$. A l'instant t=2,6s, la puissance mécanique atteint la valeur de puissance électrique, approximativement à 0,61 [pu].

Entre l'instant t=2,6s s et t=3,5s, la puissance mécanique de la turbine 300 et la puissance électrique croissent, jusqu'à atteindre la valeur de 0,9 [pu]. La vitesse de rotation de la turbine 300 croît jusqu'à dépasser la valeur $n_s$.

Après t= 3,5s, la puissance mécanique dépasse 0,9 [pu], de sorte que la vitesse de rotation de la turbine 300 continue à croître. La turbine 300 est commandée pour conserver une puissance mécanique supérieure à 0,9 [pu] de sorte que sa vitesse de rotation continue à croître jusqu'à n= $n_{opt}$.

Le calcul de la vitesse de rotation critique de la turbine 300 est ici basé sur les paramètres hydrauliques du circuit hydraulique 3. D'autres contraintes de nature électrique peuvent également limiter la puissance électrique accrue que peut fournir la centrale hydraulique 1. Des limitations en courant ou en flux dans le circuit électrique 2 peuvent ainsi également limiter l'accroissement de puissance électrique que la centrale hydraulique 1 peut fournir en dynamique. De telles limites électriques sont généralement définies durant la conception de la centrale hydraulique 1 et ne nécessitent le plus souvent pas de calcul en temps réel.

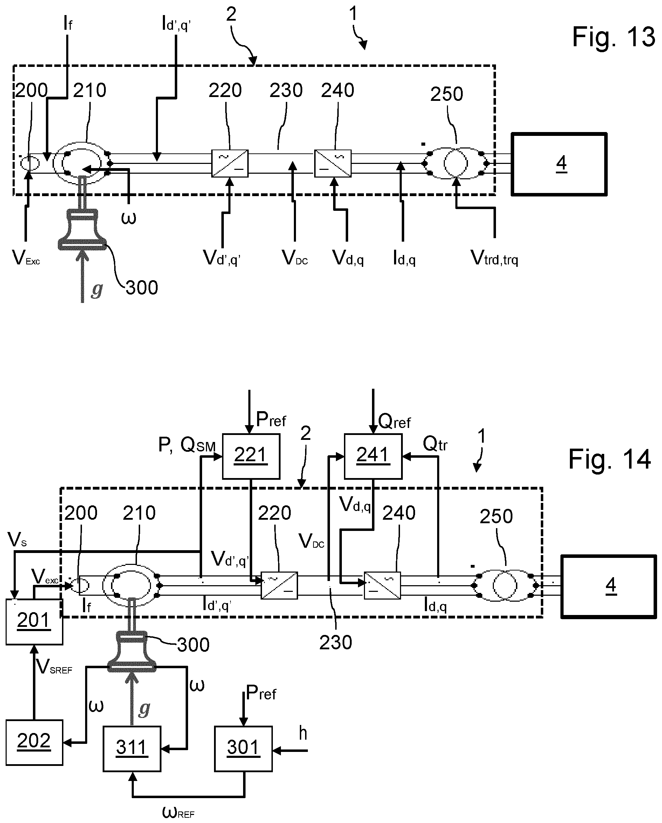

La figure 13 illustre un schéma de commande simplifié pour une centrale hydraulique 1 de type FFSM.

Les différentes variables de fonctionnement de la centrale hydraulique 1 sont ici :

- $V_{trd}, V_{trq}$ : respectivement la tension active et la tension réactive sur le transformateur 250 ;
- $V_d, V_q$ : respectivement la consigne de tension active et la consigne de tension réactive sur le convertisseur 240 ;
- $V_{d'}, V_{q'}$ : respectivement la consigne de tension active et la consigne de tension réactive sur le convertisseur 220 ;
- $V_{DC}$: la tension sur la liaison 230 ;
- $V_{exc}$ : la tension sur le circuit d'excitation 200 ;
- g le niveau d'ouverture de la directrice ;
- $I_d, I_q$ : respectivement le courant actif et le courant réactif entre le convertisseur 240 et le transformateur 250 ;
- $I_{d'}, I_{q'}$ : respectivement le courant actif et le courant réactif entre le convertisseur 220 et la machine électrique 210 ;
- $I_f$, le courant d'induit ;
- $\omega$ la vitesse de rotation de la machine électrique 210 ;
- $Q_{SM}$ la puissance réactive de la machine électrique.

Les degrés de liberté de commande de la centrale hydraulique 1 sont :

- $V_d, V_q$ ;
- $V_{d'}, V_{q'}$ ;
- g ;
- $V_{exc}$.

Ces degrés de libertés permettent de contrôler des objectifs pour les métriques de sortie suivantes :

- $V_{DC}$ ;
- $V_{trd}, V_{trq}$ ;
- la puissance réactive de la machine électrique ;
- $I_f$ ou le flux électromagnétique proportionnel à $I_f$ ;
- la vitesse de rotation de la machine électrique ;
- Vs la tension de stator de la machine électrique.

Le tableau ci-dessous rappelle l'influence de chacun des degrés de liberté sur des métriques de sortie :

| Degré de liberté | Métriques de sortie possibles |
|---|---|
| $V_d$ | $I_d$, $V_{DC}$ |
| $V_q$ | ,$I_q$, $V_{trd}$, $V_{trq}$ |
| $V_{d'}$ | Puissance active de la machine (Couple, $I_{d'}$), $V_{DC}$, $\omega$ |
| $V_{q'}$ | Puissance réactive de la machine (Vs, $I_{q'}$) |
| g | Couple de la machine électrique, $\omega$ |

(suite)

| Degré de liberté | Métriques de sortie possibles |
|---|---|
| $V_{exc}$ | Flux électromagnétique (puissance réactive de la machine, Vs, $I_f$) |

Parmi les variables globales de la centrale hydraulique 1, on peut identifier :

- la puissance active de sortie : nécessaire pour le système de puissance ;
- la tension $V_{DC}$ : nécessaire pour le fonctionnement des convertisseurs, indicatif de l'équilibrage de puissance active entre le convertisseur 220 et le convertisseur 240 ;
- la vitesse de rotation $\omega$ : nécessaire pour un rendement optimal, indicatif de l'équilibrage de puissance active entre la machine électrique et le système hydraulique.

Parmi les variables locales permettant d'optimiser le fonctionnement, on peut identifier :

- la puissance réactive de sortie : impacte le fonctionnement du système de puissance. Influe seulement sur le convertisseur 240 ;
- la puissance réactive de la machine : impacte le fonctionnement optimum de la machine. Influe seulement sur le convertisseur 220 et sur le circuit d'excitation 200 ;
- flux électromagnétique de la machine : impacte le fonctionnement optimum de la machine. Doit être contrôlé pour éviter une saturation du circuit magnétique ou une surtension aux bornes de la machine. Influe seulement sur le système d'excitation et sur le convertisseur 220.

Les modes de commande suivants de la centrale hydraulique 1 peuvent par exemple être envisagés :

- mode de commande de puissance active. Un tel mode de commande permet de disposer d'une réponse rapide de la puissance active, de l'ordre de la dizaine de millisecondes. L'objectif est de contrôler la puissance active de sortie de la centrale hydraulique 1.Les variables de commande utilisées sont alors, par ordre de priorité, la tension active $V_{d'}$ et la tension active $V_d$ et le niveau d'ouverture g ;
- mode de commande de la tension $V_{DC}$. L'objectif est de contrôler la tension $V_{DC}$. Les variables de commande utilisées sont alors, par ordre de priorité, la tension active $V_d$ et la tension active $V_{d'}$ et le niveau d'ouverture g ;
- mode de commande de la vitesse angulaire $\omega$. Les variables de commande utilisées sont alors, par ordre de priorité, le niveau d'ouverture g, la tension active $V_{d'}$ et la tension active $V_d$.

La figure 14 illustre plus précisément le schéma de principe de commande de la centrale hydraulique en mode de commande de puissance active.

La référence 301 désigne un module de commande et de calcul hydraulique. La référence 311 désigne un circuit de commande de la vanne associée à la turbine 300 (par exemple d'un servomoteur de cette vanne). La référence 201 désigne un module de contrôle d'excitation. La référence 202 désigne un limiteur de flux. La référence 221 désigne un circuit de contrôle du convertisseur 220. La référence 241 désigne un circuit de contrôle du convertisseur 240.

Le module de commande 301 reçoit la hauteur d'eau h et la consigne de puissance $P_{ref}$ comme paramètres d'entrée. Le module de commande 301 détermine une consigne de vitesse de rotation $\omega_{ref}$ et la fournit au circuit de commande 311. Le circuit de commande 311 fournit une consigne de commande de niveau d'ouverture g et reçoit la valeur de la vitesse de rotation $\omega$ de la turbine.

Le limiteur de flux 202 reçoit la valeur $\omega$ de la turbine 300 et fournit une consigne $V_{SREF}$ au module de contrôle d'excitation 201. Le module 201 reçoit une valeur de tension $V_s$ et applique une consigne de tension d'excitation $V_{exc}$ au circuit d'excitation 200.

Le circuit 221 reçoit la valeur $P_{ref}$, la puissance P (puissance électrique réelle sur le réseau 4 ou puissance réelle de la machine 210) fournie au réseau 4 et la valeur de puissance réactive $Q_{SM}$ de la machine 210. Le circuit 221 applique les consignes de tension $V_{d'}$ et $V_{q'}$ au convertisseur 220. Le circuit 241 reçoit la valeur $Q_{ref}$, la tension $V_{DC}$, et la puissance réactive $Q_{tr}$ entre le convertisseur 240 et le transformateur 250. Le circuit 241 applique les consignes de tension $V_d$ et $V_q$ au convertisseur 240.

Par exemple, si la centrale hydraulique 1 reçoit une commande $P_{ref}$ de changement de puissance active du réseau 4, le convertisseur 220 adapte la puissance de sortie de la machine électrique 210 vers la nouvelle référence de puissance. Cette adaptation peut typiquement être mise en oeuvre dans un délai de 50 ms après la commande de changement de puissance active.

Le convertisseur 240 adapte alors la puissance active extraite pour réguler la tension $V_{DC}$. La régulation de la tension $V_{DC}$ peut par exemple être effective dans délai de l'ordre d'une 200 millisecondes après la commande de changement de puissance active.

La vitesse de rotation optimale de la turbine 300 est calculée au moyen du module 301, pour la puissance de sortie requise. Le calcul peut être effectué dans un délai de quelques dizaines de millisecondes après la commande de changement de puissance active. La vitesse de rotation de la turbine 300 est ensuite ajustée par la vanne, par exemple pour accroître la puissance mécanique fournie par l'hydraulique, afin d'ajuster la vitesse de rotation de la turbine 300 à sa valeur optimale. L'ajustement de la vitesse de rotation et l'utilisation de l'effet de roue libre peuvent typiquement se poursuivre pendant un délai de l'ordre de 120 secondes après la commande de changement de puissance active.

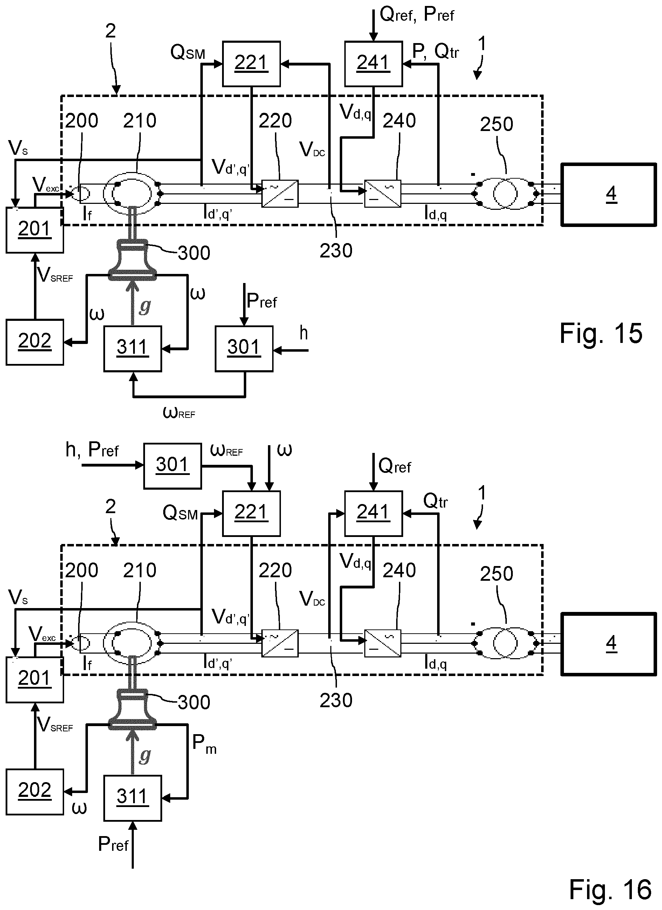

La figure 15 illustre plus précisément le schéma de principe de commande de la centrale hydraulique en mode de commande basé sur la tension continue $V_{DC}$. Les composants illustrés ici sont identiques à ceux décrits en référence à la figure 14.

Le module de commande 301 reçoit la hauteur d'eau h et la consigne de puissance $P_{ref}$ comme paramètres d'entrée. Le module de commande 301 détermine une consigne de vitesse de rotation $\omega_{ref}$ et la fournit au circuit de commande 311. Le circuit de commande 311 fournit une consigne de commande de niveau d'ouverture g et reçoit la valeur de la vitesse de rotation $\omega$ de la turbine.

Le limiteur de flux 202 reçoit la valeur $\omega$ de la turbine 300 et fournit une consigne $V_{SREF}$ au module de contrôle d'excitation 201. Le module 201 reçoit une valeur de tension $V_s$ et applique une consigne de tension d'excitation $V_{exc}$ au circuit d'excitation 200.

Le circuit 221 reçoit la valeur $P_{ref}$, la tension $V_{DC}$, et la valeur de puissance réactive $Q_{SM}$ de la machine 210. Le circuit 221 applique les consignes de tension $V_{d'}$ et $V_{q'}$ au convertisseur 220. Le circuit 241 reçoit la valeur $Q_{ref}$, la puissance P, et la puissance réactive $Q_{tr}$ entre le convertisseur 240 et le transformateur 250. Le circuit 241 applique les consignes de tension $V_d$ et $V_q$ au convertisseur 240.

Par exemple, si la centrale hydraulique 1 reçoit une commande $P_{ref}$ de changement de puissance active du réseau 4, le convertisseur 240 adapte la puissance de sortie vers la nouvelle référence de puissance. Cette adaptation peut typiquement être mise en oeuvre dans un délai de 50 ms après la commande de changement de puissance active.

Le convertisseur 220 adapte alors la puissance active de la machine 210 pour réguler la tension $V_{DC}$. La régulation de la tension $V_{DC}$ peut par exemple être effective dans délai de l'ordre d'une 200 millisecondes après la commande de changement de puissance active.

La vitesse de rotation optimale de la turbine 300 est calculée au moyen du module 301, pour la puissance de sortie requise. Le calcul peut être effectué dans un délai de quelques dizaines de millisecondes après la commande de changement de puissance active. La vitesse de rotation de la turbine 300 est ensuite ajustée par la vanne, par exemple pour accroître la puissance mécanique fournie par l'hydraulique, afin d'ajuster la vitesse de rotation de la turbine 300 à sa valeur optimale. L'ajustement de la vitesse de rotation et l'utilisation de l'effet de roue libre peuvent typiquement se poursuivre pendant un délai de l'ordre de 120 secondes après la commande de changement de puissance active.

La figure 16 illustre plus précisément le schéma de principe de commande de la centrale hydraulique en mode de commande basé sur la vitesse angulaire $\omega$. Les composants illustrés ici sont identiques à ceux décrits en référence à la figure 14.

Le module de commande 301 reçoit la hauteur d'eau h et la consigne de puissance $P_{ref}$ comme paramètres d'entrée. Le module de commande 301 détermine une consigne de vitesse de rotation $\omega_{ref}$ et la fournit au circuit de commande 311. Le circuit de commande 311 fournit une consigne de commande de niveau d'ouverture g et reçoit la valeur de la vitesse de rotation $\omega$ de la turbine 300.

Le limiteur de flux 202 reçoit la valeur $\omega$ de la turbine 300 et fournit une consigne $V_{SREF}$ au module de contrôle d'excitation 201. Le module 201 reçoit une valeur de tension $V_s$ et applique une consigne de tension d'excitation $V_{exc}$ au circuit d'excitation 200.

Le circuit 221 reçoit la valeur $\omega$, la valeur $\omega_{ref}$, et la valeur de puissance réactive $Q_{SM}$ de la machine 210. Le circuit 221 applique les consignes de tension $V_{d'}$ et $V_{q'}$ au convertisseur 220. Le circuit 241 reçoit la valeur $Q_{ref}$, la tension $V_{DC}$, et la puissance réactive $Q_{tr}$ entre le convertisseur 240 et le transformateur 250. Le circuit 241 applique les consignes de tension $V_d$ et $V_q$ au convertisseur 240.

Par exemple, si la centrale hydraulique 1 reçoit une commande $P_{ref}$ de changement de puissance active du réseau 4, la vitesse de rotation optimale de la turbine 300 est calculée au moyen du module 301, pour la puissance de sortie requise. Le calcul peut être effectué dans un délai de quelques dizaines de millisecondes après la commande de changement de puissance active.

La puissance mécanique de la machine 300 est ensuite ajustée par la vanne, par exemple pour accroître la puissance mécanique fournie par l'hydraulique, afin de converger vers la consigne de puissance requise par le réseau 4.

Le convertisseur 220 adapte alors la vitesse de rotation de la turbine 300 pour que la vitesse de rotation réelle converge vers la vitesse de rotation optimale calculée.

Pendant tout ce processus, le convertisseur 240 adapte la puissance électrique transférée au réseau 4, afin de réguler la tension $V_{DC}$ à sa valeur nominale.

En cas de baisse de fréquence sur le réseau alternatif 4, par exemple due à une perte d'une source qui lui est connectée, l'invention peut avantageusement permettre de contribuer à la compensation de la baisse d'inertie correspondante. A cet effet, la centrale hydraulique 1 peut être pilotée afin d'émuler une inertie sur celle-ci supérieure à son inertie réelle. A cet effet, on modifie la vitesse de rotation de la turbine 300 proportionnellement à la variation de fréquence sur le réseau 4, selon la relation suivante :

$$\Delta n = Ksynth * \Delta f,$$

Avec $\Delta n$ la variation de vitesse de rotation commandée, $\Delta f$ la valeur de variation transitoire de fréquence sur le réseau 4, et Ksynth une constante d'inertie émulée. Grâce aux propriétés de variation de vitesse pour la turbine 300, on peut émuler une inertie de la masse tournante à la valeur Ksynth, supérieure à son inertie réelle. Pour autant qu'on maintienne la vitesse de rotation de la masse tournante à une valeur supérieure à la vitesse critique ncrit, on peut ainsi diminuer la vitesse de rotation de la turbine 300 afin de contribuer à la compensation de la baisse d'inertie du réseau 4.

La valeur maximale Ksm de la constante d'inertie émulée Ksynth peut être définie comme suit :

$$Ksm = (n_{optinit} - n_{crit})/ \Delta fmax$$

Avec $\Delta fmax$ la limite inférieure de la variation transitoire maximale de fréquence telle que spécifiée par l'opérateur du réseau 4.

Dans l'exemple décrit précédemment, le réseau 4 est de type alternatif. On peut également prévoir de connecter la centrale hydraulique 1 à un réseau 4 continu, avec une structure de conversion appropriée.

Dans les exemples décrits précédemment, la machine hydraulique 300 est opérée en mode turbine. On peut également prévoir les mêmes modes de commande de la centrale hydraulique 1 opérée en mode pompe.

## Revendications

**1.** Procédé de commande d'une centrale hydraulique (1) comportant une turbine à vitesse variable (300) entraînant une génératrice électrique (210), une structure de conversion (220,230,240) connectée à ladite génératrice (210) d'une part et à un réseau électrique (4) d'autre part, la structure de conversion étant configurée pour convertir une tension alternative générée par la génératrice en une tension alternative présentant une fréquence différente de celle générée par la génératrice ou en une tension continue, comprenant les étapes de :

- disposer d'une loi de vitesse de rotation caractéristique minimale en fonction d'une puissance mécanique caractéristique délivrée par la turbine, cette vitesse de rotation caractéristique minimale garantissant la stabilité de la turbine ;
- faire fonctionner la centrale hydraulique avec une valeur initiale de consigne de puissance électrique à fournir au réseau électrique ;
- récupérer une valeur de hauteur d'eau en entrée de la turbine (300) ;
- une baisse de fréquence est déterminée sur ledit réseau électrique (4) ;
- définir une nouvelle valeur de consigne de puissance électrique (Pes) supérieure à la valeur initiale, et de sorte que la vitesse de rotation de la turbine (300) diminue proportionnellement à la baisse de fréquence déterminée, la nouvelle valeur de puissance électrique à fournir au réseau électrique étant reçue;
- convertir ladite nouvelle valeur de puissance électrique (Pes) à fournir en une nouvelle valeur de consigne de puissance mécanique $P_{ch}$ ;
- transformer la nouvelle valeur de consigne de puissance mécanique $P_{ch}$ en une puissance mécanique caractéristique (P11) à délivrer en transformant la nouvelle valeur de consigne de puissance électrique (Pes) en ladite puissance mécanique caractéristique (P11) à délivrer ;
- à partir de ladite loi, pour ladite puissance mécanique caractéristique à délivrer (P11), déterminer la vitesse de rotation minimale $n_{crit}$ de la turbine (300) ;
- commander la centrale hydraulique (1) pour délivrer une puissance électrique égale à la nouvelle valeur de consigne de puissance électrique (Pec) et pour maintenir la vitesse de rotation de la turbine (300) au-dessus de la vitesse de rotation minimale déterminée $n_{crit}$.

**2.** Procédé de commande selon la revendication 1, dans lequel ladite étape de commande de la centrale hydraulique (1) pour délivrer une puissance électrique égale à la nouvelle valeur de consigne de puissance électrique (Pec) comprend l'application de consignes successives de puissance électrique croissantes entre la valeur initiale de consigne de puissance électrique et ladite nouvelle valeur de consigne de puissance électrique (Pec)

3. Procédé de commande selon la revendication 2, comprenant :

- la transformation des consignes de puissance électrique successives en consignes de puissance mécanique caractéristique successives ;
- à partir de ladite loi, pour chacune des consignes de puissance mécanique caractéristique, déterminer la vitesse de rotation minimale correspondante de la turbine (300).

4. Procédé de commande selon l'une quelconque des revendications précédentes, dans lequel la centrale hydraulique (1) est commandée pour délivrer une puissance électrique Pes au réseau électrique égale à la nouvelle valeur de consigne de puissance électrique Pec et pour maintenir la vitesse de rotation de la turbine (300) au-dessus d'une vitesse de rotation de sécurité $n_s$, avec $n_s > n_{crit}$.

5. Procédé de commande selon la revendication 4, comprenant les étapes de :

- a) récupérer la vitesse de rotation instantanée n de la turbine (300) ;
- b) si $n_s > n > n_{crit}$, commander la centrale hydraulique (1) avec une consigne de puissance électrique $P_{ec} = P_{es} * (n - n_{crit})/(n_s - n_{crit})$ ;
- c) répéter les étapes a) et b).

6. Procédé de commande selon l'une quelconque des revendications précédentes, comprenant les étapes de :

- récupérer la vitesse maximale RoCoP de variation de puissance mécanique Pm de la turbine (300), avec RoCoP=dPm/dt ;
- récupérer l'inertie Ht de la masse incluant la turbine (300) et la génératrice (220) ;
- calculer une quantité d'énergie cinétique $W_{ec}$ disponible par effet de roue libre, avec $W_{ec} = Ht * (n_{optinit}^2 - n_{crit}^2)$, avec $n_{optinit}$ la vitesse pour la valeur initiale de consigne de puissance électrique à fournir au réseau électrique.

7. Procédé de commande selon la revendication 6, comprenant les étapes de :

- déterminer une valeur initiale de consigne de puissance mécanique $P_{mecainit}$ correspondant à la valeur initiale de puissance électrique à fournir au réseau électrique ;
- si $W_{req} > W_{ec}$, avec $W_{req} = (P_{ch} - P_{mecainit})^2/(2*RoCoP)$, calculer une valeur de puissance mécanique $P_{lim}$ vérifiant $P_{lim} < P_{ch}$ et $(P_{lim} - P_{mecainit})^2/(2*RoCoP) < W_{ec}$ ;
- commander transitoirement la centrale hydraulique (1) avec une valeur de consigne de puissance mécanique égale à $P_{lim}$ Ou avec une valeur de consigne de puissance électrique à fournir au réseau électrique correspondant à cette consigne de puissance mécanique $P_{lim}$.

8. Procédé de commande selon l'une quelconque des revendications précédentes, dans lequel ladite centrale hydraulique (1) commandée inclut une structure de conversion (220,230,240) de type FFSM incluant un premier convertisseur alternatif/continu (220) connecté audit moteur électrique (210).

9. Procédé de commande selon la revendication 8, dans lequel ladite centrale hydraulique (1) est commandée en mode de commande de puissance active en appliquant la nouvelle valeur de puissance électrique (Pes) à fournir au réseau électrique sur un circuit de commande du premier convertisseur alternatif/continu (220).

10. Procédé de commande selon la revendication 8, dans lequel ladite centrale hydraulique (1) est commandée en mode de commande basé sur une tension continue dans la structure de conversion, en appliquant une consigne pour ladite tension continue sur un circuit de commande du premier convertisseur alternatif/continu (220).

11. Procédé de commande selon la revendication 8, dans lequel ladite centrale hydraulique (1) est commandée en mode de commande basé sur la vitesse de rotation de la turbine, en appliquant une consigne pour ladite vitesse de rotation de la turbine sur un circuit de commande du premier convertisseur alternatif/continu (220).

**Patentansprüche**

1. Verfahren zur Steuerung eines hydraulischen Kraftwerks (1), aufweisend eine Turbine (300) mit variabler Geschwindigkeit, die einen elektrischen Generator (210) antreibt, eine Umwandlungsstruktur (220, 230, 240), die einerseits mit dem Generator (210) und andererseits mit einem elektrischen Netzwerk (4) verbunden ist, wobei die Umwandlungsstruktur konfiguriert ist, um eine vom Generator erzeugte Wechselspannung in eine Wechselspannung, die eine unterschiedliche Frequenz von der vom Generator erzeugten darstellt, oder in eine Gleichspannung umzuwandeln, umfassend die Schritte:

   - über ein Gesetz der charakteristischen Mindestdrehzahl in Abhängigkeit von einer von der Turbine gelieferten charakteristischen mechanischen Leistung verfügen, wobei diese charakteristische Mindestdrehzahl die Stabilität der Turbine gewährleistet;
   - das hydraulische Kraftwerk mit einem anfänglichen Sollwert der an das elektrische Netzwerk abzugebenden elektrischen Leistung betreiben;
   - einen Wert der Wasserhöhe am Eingang der Turbine (300) wiedergewinnen;
   - ein Frequenzrückgang wird auf dem elektrischen Netzwerk (4) bestimmt;
   - einen neuen Sollwert für die elektrische Leistung (Pes) bestimmen, der höher als der Anfangswert ist, und so, dass die Drehzahl der Turbine (300) proportional zu dem ermittelten Frequenzrückgang abnimmt, wobei der neue Wert für die an das elektrische Netzwerk abzugebende elektrische Leistung empfangen wird;
   - den neuen Wert der zu liefernden elektrischen Leistung (Pes) in einen neuen Sollwert der mechanischen Leistung $P_{ch}$ umwandeln;
   - den neuen Sollwert der mechanischen Leistung $P_{ch}$ in eine zu liefernde charakteristische mechanische Leistung (P11) transformieren, indem der neue Sollwert der elektrischen Leistung (Pes) in die zu liefernde charakteristische mechanische Leistung (P11) transformiert wird;
   - aus dem Gesetz für die zu liefernde charakteristische mechanische Leistung (P11) die minimale Drehzahl $n_{crit}$ der Turbine (300) bestimmen;
   - das hydraulische Kraftwerk (1) steuern, um eine elektrische Leistung zu liefern, die gleich dem neuen Sollwert der elektrischen Leistung (Pec) ist, und um die Drehzahl der Turbine (300) über der bestimmten Mindestdrehzahl $n_{crit}$ zu halten.

2. Verfahren zur Steuerung nach Anspruch 1, wobei der Schritt des Steuerns des hydraulischen Kraftwerks (1), um eine elektrische Leistung gleich dem neuen Sollwert der elektrischen Leistung (Pec) zu liefern, das Anwenden von aufeinanderfolgenden Sollwerten der elektrischen Leistung umfasst, die zwischen dem anfänglichen Sollwert der elektrischen Leistung und dem neuen Sollwert der elektrischen Leistung (Pec) ansteigen.

3. Verfahren zur Steuerung nach Anspruch 2, umfassend:

   - die Transformation der aufeinanderfolgenden elektrischen Leistungssollwerte in aufeinanderfolgende charakteristische mechanische Leistungssollwerte;
   - aus dem Gesetz für jeden der charakteristischen mechanischen Leistungssollwerte die entsprechende Mindestdrehzahl der Turbine (300) bestimmen.

4. Verfahren zur Steuerung nach einem der vorhergehenden Ansprüche, wobei das hydraulische Kraftwerk (1) gesteuert wird, um eine elektrische Leistung Pes an das elektrische Netzwerk abzugeben, die gleich dem neuen Sollwert der elektrischen Leistung Pec ist, und um die Drehzahl der Turbine (300) über einer Sicherheitsdrehzahl n, zu halten, wobei $n_s > n_{crit}$.

5. Verfahren zur Steuerung nach Anspruch 4, umfassend die Schritte:

   - a) die momentane Drehzahl n der Turbine (300) wiedergewinnen;
   - b) wenn $n_s > n > n_{crit}$, das hydraulische Kraftwerk (1) mit einem Sollwert für die elektrische Leistung $P_{ec} = P_{es} * (n - n_{crit})/(n_s - n_{crit})$ steuern;
   - c) die Schritte a) und b) wiederholen.

6. Verfahren zur Steuerung nach einem der vorhergehenden Ansprüche, umfassend die Schritte:

   - die maximale Geschwindigkeit RoCoP der mechanischen Leistungsänderung Pm der Turbine (300) wiedergewinnen, wobei RoCoP=dPm/dt;

- die Trägheit Ht der Masse, die die Turbine (300) und den Generator (220) einschließt, wiedergewinnen;
- eine Menge an kinetischer Energie $W_{ec}$ berechnen, die durch den Freilaufeffekt verfügbar ist, mit $W_{ec}=Ht * (n_{optinit}^2 - n_{crit}^2)$, wobei $n_{optinit}$ die Geschwindigkeit für den anfänglichen Sollwert der an das elektrische Netzwerk abzugebenden elektrischen Leistung ist.

**7.** Verfahren zur Steuerung nach Anspruch 6, umfassend die Schritte:

- einen anfänglichen Sollwert für die mechanische Leistung $P_{mecainit}$ bestimmen, der dem anfänglichen Wert der dem elektrischen Netzwerk zuzuführenden elektrischen Leistung entspricht;
- wenn $W_{req} > W_{ec}$, mit $W_{req} = (P_{ch}-P_{mecainit})^2/(2*RoCoP)$, einen Wert für die mechanische Leistung $P_{lim}$ berechnen, wobei $P_{lim} <P_{ch}$ und $(P_{lim}-P_{mecainit})^2/ (2*RoCoP) < W_{ec}$ verifiziert wird;
- das hydraulische Kraftwerk (1) vorübergehend mit einem Sollwert für die mechanische Leistung, der gleich $P_{lim}$ ist, oder mit einem Sollwert für die dem elektrischen Netzwerk zuzuführende elektrische Leistung steuern, die diesem Sollwert für die mechanische Leistung $P_{lim}$ entspricht.

**8.** Verfahren zur Steuerung nach einem der vorhergehenden Ansprüche, wobei das gesteuerte hydraulische Kraftwerk (1) eine Umwandlungsstruktur (220, 230, 240) vom Typ FFSM einschließt, die einen ersten Wechselstrom/Gleichstrom-Wandler (220) einschließt, der mit dem Elektromotor (210) verbunden ist.

**9.** Verfahren zur Steuerung nach Anspruch 8, wobei das hydraulische Kraftwerk (1) im Wirkleistungssteuerungsmodus gesteuert wird, indem der neue Wert der dem elektrischen Netzwerk zuzuführenden elektrischen Leistung (Pes) auf einen Steuerkreis des ersten Wechselstrom/Gleichstrom-Wandlers (220) angewendet wird.

**10.** Verfahren zur Steuerung nach Anspruch 8, wobei das hydraulische Kraftwerk (1) in einem auf einer Gleichspannung in der Umwandlungsstruktur beruhenden Steuermodus gesteuert wird, indem ein Sollwert für die Gleichspannung auf eine Steuerschaltung des ersten Wechselstrom/Gleichstrom-Wandlers (220) angewendet wird.

**11.** Verfahren zur Steuerung nach Anspruch 8, wobei das hydraulische Kraftwerk (1) in einem auf der Drehzahl der Turbine beruhenden Steuermodus gesteuert wird, indem ein Sollwert für die Drehzahl der Turbine auf eine Steuerschaltung des ersten Wechselstrom/Gleichstrom-Wandlers (220) angewendet wird.

**Claims**

**1.** Method for controlling a hydraulic power plant (1), comprising a variable-speed turbine (300) driving an electrical generator (210), a conversion structure (220, 230, 240) connected to said generator (210) on the one hand and to an electrical network (4) on the other hand, said conversion structure being configured to convert an AC voltage generated by the generator into an AC voltage of a frequency different from that generated by the generator or into a DC voltage, comprising the steps of:

- having a law governing the minimum characteristic rotational speed according to a characteristic mechanical power delivered by the turbine, said minimum characteristic rotational speed ensuring the stability of the turbine;
- operating the hydraulic power plant with an initial setpoint value for the electrical power to be supplied to the electrical network;
- obtaining a water height value at the turbine inlet (300);
- a frequency drop is determined on said electrical network (4);
- defining a new electrical power setpoint value (Pes) higher than the initial value so that the rotational speed of the turbine (300) decreases in proportion to the determined frequency drop when the new electrical power value to be supplied to the electricity network is received;
- converting said new electrical power value (Pes) to be supplied into a new mechanical power setpoint value $P_{ch}$;
- transforming said new mechanical power setpoint value $P_{ch}$ into a characteristic mechanical power (P11) to be delivered by transforming said new electrical power setpoint value (Pes) into said characteristic mechanical power (P11) to be delivered;
- on the basis of said law, for said characteristic mechanical power to be delivered (P11), determining the minimum rotational speed $n_{crit}$ of the turbine (300);
- controlling the hydraulic power plant (1) to deliver an electrical power equal to the new electrical power setpoint value (Pec) and to maintain the rotational speed of the turbine (300) above the determined minimum rotational speed $n_{crit}$.

**2.** Control method according to claim 1, wherein said step of controlling the hydraulic power plant (1) to deliver an electrical power equal to the new electrical power setpoint value (Pec) comprises the application of successive electrical power setpoints increasing between the initial electrical power setpoint value and said new electrical power setpoint value (Pec).

**3.** Control method according to claim 2, comprising the steps of:

- transforming successive electrical power setpoints into successive characteristic mechanical power setpoints;
- on the basis of said law, for each of the characteristic mechanical power setpoints, determining the corresponding minimum rotational speed of the turbine (300).

**4.** Control method according to any one of the preceding claims, wherein the hydraulic power plant (1) is controlled to deliver an electrical power Pes to the electrical network equal to the new electrical power setpoint value Pec and to maintain the rotational speed of the turbine (300) above a safety speed $n_s$, where $n_s > n_{crit}$.

**5.** Control method according to claim 4, comprising the steps of:

- a) obtaining the instantaneous rotational speed n of the turbine (300);
- b) if $n_s > n > n_{crit}$, controlling the hydraulic power plant (1) with an electrical power setpoint $P_{ec} = P_{es}* (n - n_{crit})/(n_s - n_{crit})$;
- c) repeating steps a) and b).

**6.** Control method according to any one of the preceding claims, comprising the steps of:

- obtaining the maximum speed of variation RoCoP of the mechanical power Pm of the turbine (300), where RoCoP=dPm/dt;
- obtaining the inertia Ht of the mass including the turbine (300) and the generator (220);
- calculating a quantity of kinetic energy $W_{ec}$ available due to freewheeling effect, where $W_{ec} = Ht * (n_{optinit}^2 - n_{crit}^2)$, where $n_{optinit}$ is the speed for the initial electrical power setpoint value to be supplied to the electrical network.

**7.** Control method according to claim 6, comprising the steps of:

- determining an initial mechanical power setpoint value $P_{mecainit}$ corresponding to the initial electrical power value to be supplied to the electrical network;
- if $W_{req} > W_{ec}$, where $W_{req} = (P_{ch} - P_{mecainit})^2/(2*RoCoP)$, calculating a mechanical power value $P_{lim}$ confirming $P_{lim} < P_{ch}$ and $(P_{lim} - P_{mecainit})^2/(2*RoCoP) < W_{ec}$;
- temporarily controlling the hydraulic power plant (1) with a mechanical power setpoint value equal to $P_{lim}$ or with an electrical power setpoint value to be supplied to the electrical network corresponding to said mechanical power setpoint $P_{lim}$.

**8.** Control method according to any one of the preceding claims, wherein said controlled hydraulic power plant (1) includes an FFSM-type conversion structure (220, 230, 240) including a first AC/DC converter (220) connected to said electric motor (210).

**9.** Control method according to claim 8, wherein said power plant (1) is controlled in an active power control mode by applying the new electrical power value (Pes) to be supplied to the electrical network to a control circuit of the first AC/DC converter (220).

**10.** Control method according to claim 8, wherein said power plant (1) is controlled in a control mode based on a DC voltage in the conversion structure by applying a setpoint for said DC voltage to a control circuit of the first AC/DC converter (220).

**11.** Control method according to claim 8, wherein said hydraulic power plant (1) is controlled in a control mode based on the rotational speed of the turbine by applying a setpoint for said rotational speed of the turbine to a control circuit of the first AC/DC converter (220).

EP 3 746 655 B1

Fig. 1

Fig. 2

Fig. 3

17

Fig. 4

Fig. 5

Fig. 6

Fig. 7

Fig. 8

T11

Fig. 9

n11

Q11

Fig. 10

n11

Fig. 11

Fig. 12

Fig. 13

Fig. 14

EP 3 746 655 B1

Fig. 15

Fig. 16

24

Fig. 17

**RÉFÉRENCES CITÉES DANS LA DESCRIPTION**

**Documents brevets cités dans la description**

- EP 0303170 A